(19) Europäisches Patentamt
European Patent Office
Office européen des brevets

(11) **EP 4 692 182 A1**

(12) **EUROPEAN PATENT APPLICATION**
published in accordance with Art. 153(4) EPC

(43) Date of publication:
**11.02.2026 Bulletin 2026/07**

(21) Application number: **24779325.0**

(22) Date of filing: **11.03.2024**

(51) International Patent Classification (IPC):
**C08J 5/18** (2006.01)   **B29C 48/08** (2019.01)
**B29C 55/02** (2006.01)   **B32B 27/32** (2006.01)
**B65D 65/40** (2006.01)

(52) Cooperative Patent Classification (CPC):
**B29C 48/08; B29C 55/02; B32B 27/32;
B65D 65/40; C08J 5/18**

(86) International application number:
**PCT/JP2024/009233**

(87) International publication number:
**WO 2024/203194 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053890
18.12.2023 JP 2023213272**

(71) Applicant: **Prime Polymer Co., Ltd.
Tokyo 104-0028 (JP)**

(72) Inventors:
• **KANAZAWA, Akira
  Ichihara-shi, Chiba 299-0108 (JP)**
• **SEKIYA, Keiko
  Ichihara-shi, Chiba 299-0108 (JP)**

(74) Representative: **J A Kemp LLP
80 Turnmill Street
London EC1M 5QU (GB)**

(54) **FILM, LAMINATE, AND PACKAGING MATERIAL**

(57)    A film containing an ethylene-based polymer satisfying the following requirements (a1) to (a4): (a1) a density is 940 to 980 kg/m$^3$; (a2) a melt flow rate (MFR) measured at 190°C and a load of 2.16 kg is 0.01 to 10 g/10 min; (a3) an amount of a low-molecular-weight component is 300 ppm or less; and (a4) a ratio of a weight average molecular weight (Mw) to a number average molecular weight (Mn) (molecular weight distribution; Mw/Mn) measured by gel permeation chromatography (GPC) is 10 or less.

EP 4 692 182 A1

**Description**

Technical Field

The present invention relates to a film, a laminate, and a packaging material.

Background Art

In recent years, a law concerning the disposal of various plastics has been enacted against the background of environmental problems, and the need for the recycling of package materials also increases, and therefore, various recyclable packaging materials are examined (for example, see Patent Literature 1 and 2). Among them, for example, monomaterials composed of a single material (for example, ALL PE) are attracting attention as recyclable packaging materials.

In typical packaging materials, films made from various resins are used as the base material, and the characteristics required for the ALL PE base material include, for example, heat resistance. From the viewpoint of heat resistance, high-density polyethylene (HDPE) is suitable as the resin,
but the use of HDPE has a problem in that the transparency becomes poor and a white powder that is assumed to be derived from a low-molecular-weight component is generated.

Patent Literature 3 discloses an invention regarding a stretched film composed of a polyethylene-based resin composition having specific physical properties as a base material for packaging materials having an excellent balance among rigidity, low shrinkage, and longitudinal tear strength.

Citation List

Patent Literature

[Patent Literature 1] JP6716764B
[Patent Literature 2] JP2020-121455A
[Patent Literature 3] WO2022/153893

Summary of Invention

Technical Problem

A barrier layer may be formed on the surface layer of a packaging material by vapor deposition or coating to impart water vapor or gas barrier properties to the packaging material. But there is a case where the barrier layer may be contaminated by a low-molecular-weight component in a polyethylene while the packaging material is stored in a rolled state, and there is a problem in that the adhesive strength decreases when the packaging material is drylaminated with other base materials afterwards. In Patent Literature 1 to 3, there is neither description nor suggestion regarding a solution to such a problem.

An object of the present invention is to provide a film that can be used as a base material of a packaging material having excellent low contamination properties.

Solution to Problem

As a result of intensive studies in view of the above problem, the present inventors found that a film containing an ethylene-based polymer having specific physical properties is capable of solving the above problem and completed the present invention. Examples of aspects of the present invention are shown below.

[1] A film comprising an ethylene-based polymer satisfying the following requirements (a1) to (a4):

(a1) a density is 940 to 980 kg/m$^3$;
(a2) a melt flow rate (MFR) measured at 190°C and a load of 2.16 kg is 0.01 to 10 g/10 min;
(a3) an amount of a low-molecular-weight component is 300 ppm or less; and
(a4) a ratio of a weight average molecular weight (Mw) to a number average molecular weight (Mn) (molecular weight distribution; Mw/Mn) measured by gel permeation chromatography (GPC) is 10 or less.

[2] The film according to [1], wherein the film has a thickness of 0.005 mm or more and 1 mm or less.

[3] The film according to [2], wherein the film is a stretched film.

[4] A laminate comprising the film according to any one of [1] to [3].

[5] The laminate according to [4], further comprising a barrier layer.

[6] A package comprising the film according to any one of [1] to [3].

[7] A package comprising the laminate according to [4] or [5].

[8] A method for producing the film according to any one of [1] to [3], the method comprising a step of melting a raw material resin containing the ethylene-based polymer.

Advantageous Effects of Invention

The film of the present invention has excellent low contamination properties and thus can be suitably used as a recyclable packaging material and, furthermore, has excellent elastic modulus (rigidity) and transparency.

Description of Embodiments

Hereafter, the present invention will be described in detail.

A film according to the present invention contains an ethylene-based polymer satisfying the following requirements (a1) to (a4).

(a1) The density is 940 to 980 $kg/m^3$.

(a2) The melt flow rate (MFR) measured at 190°C and a load of 2.16 kg is 0.01 to 10 g/10 min.

(a3) The amount of a low-molecular-weight component is 300 ppm or less.

(a4) The ratio of the weight average molecular weight (Mw) to the number average molecular weight (Mn) (molecular weight distribution; Mw/Mn) measured by gel permeation chromatography (GPC) is 10 or less.

[Ethylene-based polymer]

<Requirement (a1)>

The lower limit of the density of the ethylene-based polymer is normally 940 $kg/m^3$ or higher, preferably 942 $kg/m^3$ or higher, more preferably 944 $kg/m^3$ or higher, still more preferably 946 $kg/m^3$ or higher, far still more preferably 948 $kg/m^3$ or higher, and particularly preferably 950 $kg/m^3$ or higher, and the upper limit is normally 980 $kg/m^3$ or lower, preferably 975 $kg/m^3$ or lower, more preferably 970 $kg/m^3$ or lower, and still more preferably 965 $kg/m^3$ or lower. When the density of the ethylene-based polymer is within the range, rigidity and strength can be obtained. The density is a value measured in accordance with JIS K7112 (density gradient tube method).

<Requirement (a2)>

The lower limit of the MFR of the ethylene-based polymer is normally 0.01 g/10 min or more, preferably 0.05 g/10 min or more, more preferably 0.1 g/10 min or more, still more preferably 0.3 g/10 min or more, far still more preferably 0.5 g/10 min or more, and particularly preferably 0.7 g/10 min or more, and the upper limit is normally 10 g/10 min or less, preferably 8 g/10 min or less, and more preferably 5 g/10 min or less. When the MFR of the ethylene-based polymer is within the range, strength and extrusion properties can be obtained.

<Requirement (a3)>

The upper limit of the amount of the low-molecular-weight component in the ethylene-based polymer is normally 300 ppm or less, preferably 250 ppm or less, more preferably 200 ppm or less, still more preferably 150 ppm or less, and particularly preferably 100 ppm or less, and the lower limit is not particularly limited, but is preferably 1 ppm or more and more preferably 5 ppm or more. When the amount of the low-molecular-weight component in the ethylene-based polymer is within the range, a film having excellent low contamination properties can be obtained.

Here, the amount of the low-molecular-weight component contained in the present invention is a value of the amount of $C_{10}$ to $C_{50}$ components for which a Soxhlet extraction liquid (hexane) having an appropriately adjusted volume is used as a test liquid and the test liquid is subjected to GC (FID) and quantified (n-$C_{20}H_{42}$ conversion) by an absolute calibration curve method. The details of Soxhlet extraction, calibration curve creation, and the like will be shown below.

(1) Soxhlet extraction

Regarding Soxhlet extraction conditions, after Soxhlet extraction with a solvent is performed using 5 g of a sample, the sample having a volume adjusted to 25 mL to 100 mL is used as a test liquid.

(2) Creation of calibration curve by $n\text{-}C_{20}H_{42}$ conversion

For quantification by the $C_{20}$ conversion of $C_{10}$ to $C_{50}$ oligomers, four levels of standard solutions having different concentrations, for which $n\text{-}C_{20}H_{42}$ is considered as a standard, are subjected to GC (FID), a calibration curve is created by an absolute calibration curve method using the obtained area values and concentrations, and the slope and intercept of the calibration curve are obtained.

(3) Confirmation of detection positions of $C_{10}$ to $C_{50}$ oligomers (n-paraffin)

Regarding the oligomers (n-paraffin) that are the quantification objects, detection positions are confirmed from retention times in a GC (FID) chromatogram at the time of oligomer quantification using a paraffin mixed standard solution.

(4) $C_{20}$ conversion quantification of $C_{10}$ to $C_{50}$ oligomers (n-paraffin)

The concentration ($\mu$g/mL) in the extraction liquid is obtained by a formula 1) from the peak area of each of $C_{10}$ to $C_{50}$ (n-paraffin) obtained by measuring the Soxhlet extraction liquid by GC (FID) and the slope and intercept obtained from the calibration curve, and then $C_{50}$ to $C_{50}$ (n-paraffin) quantification values (w/w%) in the sample are calculated using a formula 2).

Concentration in extraction liquid ($\mu$g/mL) = (area value - intercept)/slope            Formula 1)

Quantification value (w/w%) = concentration in extraction liquid ($\mu$g/mL) $\times$ quantification amount (mL)/ sample weight (g)/10000            Formula 2)

<Requirement (a4)>

The upper limit of the Mw/Mn of the ethylene-based polymer is normally 10 or less, preferably 8 or less, more preferably 7 or less, still more preferably 6 or less, far still more preferably 5 or less, and particularly preferably 4.5 or less, and the lower limit is not particularly limited, but is preferably 1.0 or more, more preferably 1.5 or more, still more preferably 2.0 or more, far still more preferably 2.2 or more, and particularly preferably 2.4 or more. When the Mw/Mn of the ethylene-based polymer is within the range, the amount of the low-molecular-weight component is small, the degree of stickiness of the ethylene-based polymer to the film is small, the contamination resistance is favorable, the extrusion properties of the ethylene-based polymer are favorable, and furthermore, a film that is favorable in terms of mechanical properties, for example, dart impact strength, can be obtained.

The ethylene-based polymer is not particularly limited as long as the ethylene-based polymer satisfies the requirements (a1) to (a4), but an ethylene homopolymer and a copolymer of ethylene and an $\alpha$-olefin having 3 or more carbon atoms (ethylene/$\alpha$-olefin copolymer) are preferable. Specific examples of the $\alpha$-olefin in the ethylene/$\alpha$-olefin copolymer include propylene, 1-butene, 4-methyl-1-pentene, 1-hexene, and 1-octene.

The amount of a constitutional unit derived from ethylene in the ethylene-based polymer is 50 mol% or more and 100 mol% or less, preferably more than 50 mol% and 100 mol% or less, more preferably 55 to 100 mol%, and still more preferably 60 to 100 mol%.

The ethylene-based polymer may contain a constitutional unit derived from one or more biomass-derived monomers (ethylene, $\alpha$-olefin). The monomer that constitutes the polymer may be only a biomass-derived monomer or may be both of a biomass-derived monomer and a fossil fuel-derived monomer. The biomass-derived monomer refers to a monomer composed of any renewable natural raw material that contains fungi, yeast, algae and bacteria and is derived from a plant or an animal, and a residue thereof, contains a $^{14}$C isotope as carbon in a proportion of approximately $1 \times 10^{-12}$ and has a biomass carbon concentration (pMC) measured in accordance with ASTM D6866 of approximately 100 (pMC). The biomass-derived monomer (ethylene) can be obtained by, for example, a conventionally known method.

The ethylene-based polymer preferably contains a constitutional unit derived from the biomass-derived monomer from the viewpoint of reducing an environmental impact (mainly greenhouse gases reduction). Even when the raw material monomer contains a biomass-derived olefin, the molecular structure thereof except for $^{14}$C isotopes contained in a proportion of about $10^{-12}$ to $10^{-14}$ is equivalent to that of an ethylene-based polymer composed of a fossil fuel-derived monomer as long as the polymer production conditions such as a catalyst for polymerization, the polymerization process, and the polymerization temperature are equivalent. Therefore, the performances thereof are considered not to be different from each other.

The ethylene-based polymer may contain a chemical recycling-derived monomer (ethylene, $\alpha$-olefin). The monomer that constitutes the polymer may be only a chemical recycling-derived monomer or may contain a chemical recycling-derived monomer and a fossil fuel-derived monomer and/or a biomass-derived monomer. The chemical recycling-derived monomer can be obtained by a conventionally known method.

The ethylene-based polymer preferably contains the chemical recycling-derived monomer from the viewpoint of reducing an environmental impact (mainly waste reduction). Even when the raw material monomer contains the chemical recycling-derived monomer, since the chemical recycling-derived monomer is a monomer obtained by restoring a polymer such as waste plastic up to the monomer unit such as ethylene by, for example, depolymerization or thermal decomposition or a monomer produced using the above-described monomer as a raw material, the molecular structure thereof is thus equivalent to that of the ethylene-based polymer composed of a fossil fuel-derived monomer as long as the polymer production conditions such as the catalyst for polymerization, the polymerization process, and the polymerization temperature are equivalent. Therefore, the performances thereof are considered not to be different from each other.

The ethylene-based polymer can be produced by a high-temperature solution method using a known catalyst, such as a Ziegler-Natta catalyst and a metallocene catalyst. The catalyst is not particularly limited; however, when the balance with extrusion properties is taken into account, the Ziegler-Natta catalyst is preferable since an ethylene-based polymer having an appropriate molecular weight distribution can be obtained. The high-temperature solution method is a method in which, for example, hexane is pressurized as a solvent and a polymer is produced at a high temperature in a uniform state. In the high-temperature solution method, since a reaction is performed in a uniform phase, the composition distribution of an ethylene-based polymer to be obtained is small, as a result, the generation of an oligomer or the generation of other volatile compounds can be suppressed. In addition, the solvent, such as hexane, is removed by flashing under the atmospheric pressure, and a precipitated polymer is separately dried. At the time of the flashing, the oligomer or the other volatile compounds are removed together with the solvent. In the case of industrially producing the ethylene-based polymer by the high-temperature solution method, it is preferable to employ a continuous process in which the solvent and the raw material are continuously supplied, the flashing operation is repeatedly performed, and a product and the raw material monomer are collected. Therefore, a film of an ethylene-based polymer (A) obtained by the high-temperature solution method has a characteristic of an extremely small amount of a component that seeps out from the film and also has excellent dart impact strength.

[Film]

A film of the present invention contains the above-described ethylene-based polymer. In addition, the film of the present invention may contain, if needed, at least one of various additives which are added to a typical polyolefinbased film, such as a weathering stabilizer, a heat-resistant stabilizer, an antistatic agent, an antifogging agent, an anti-blocking agent, a slipping agent, a lubricant, a pigment, an anti-drip agent, and a nucleating agent, insofar as the object of the present invention is not impaired.

The film of the present invention can be produced by forming by a known method including a step of melting a raw material resin containing the ethylene-based polymer. The film of the present invention is an unstretched film or a stretched film. When a mechanical strength or the like is taken into account, a stretched film is preferable.

The thickness of the film of the present invention may be appropriately set according to various applications, but typically, the lower limit is preferably 0.005 mm (5 $\mu$m) or more, more preferably 0.01 mm (10 $\mu$m) or more, and the upper limit is preferably 1 mm or less, more preferably 0.5 mm or less, and still more preferably 0.3 mm or less. When the thickness of the film is within the range, rigidity and strength as a packaging material are well-balanced.

<Stretched film>

In a case where the film of the present invention is a stretched film, the stretched film is a uniaxially stretched film or a biaxially stretched film.

The stretched film may be a single-layer film or a multilayer film. In addition, in the case of constituting the multilayer film, the above-described ethylene-based polymer may be used in any layer and may be used in a plurality of layers. The layer constitution of the multilayer film is not particularly limited, and examples thereof include constitutions as shown below.

The ethylene-based polymer/linear low-density polyethylene or medium-density polyethylene/the ethylene-based polymer,

the ethylene-based polymer/linear low-density polyethylene or medium-density polyethylene/medium-density polyethylene,

the ethylene-based polymer/high-density polyethylene/linear low-density polyethylene or medium-density polyethylene/high-density polyethylene/the ethylene-based polymer,

the ethylene-based polymer/high-density polyethylene/linear low-density polyethylene or medium-density polyethylene/high-density polyethylene/linear low-density polyethylene or medium-density polyethylene,

the ethylene-based polymer/linear low-density polyethylene or medium-density polyethylene/linear low-density polyethylene or medium-density polyethylene/linear low-density polyethylene or medium-density polyethylene/linear low-density polyethylene or medium-density polyethylene,

high-density polyethylene/linear low-density polyethylene or medium-density polyethylene/the ethylene-based polymer/linear low-density polyethylene or medium-density polyethylene/linear low-density polyethylene or medium-density polyethylene,

high-density polyethylene/linear low-density polyethylene or medium-density polyethylene/the ethylene-based polymer/linear low-density polyethylene or medium-density polyethylene/high-density polyethylene,

the ethylene-based polymer/medium-density polyethylene/linear low-density polyethylene/medium-density polyethylene/the ethylene-based polymer,

the ethylene-based polymer/linear low-density polyethylene or medium-density polyethylene/linear low-density polyethylene/linear low-density polyethylene or medium-density polyethylene/linear low-density polyethylene or medium-density polyethylene.

The stretch ratio in the stretched film is preferably 1.5 times or more, more preferably 2.0 times or more, particularly preferably 2.5 times or more, and most preferably 3.0 times or more. The upper limit of the stretch ratio is not particularly limited, but is preferably 60 times or less, and more preferably 50 times or less. When the stretch ratio is within the range, rigidity and strength can be obtained.

Examples of a method for producing the stretched film include, but are not particularly limited to, a method for stretching a film (raw film to be stretched) obtained by a known melt extrusion forming method.

Examples of a method for stretching a raw film to be stretched include a method of biaxial stretching in the longitudinal and width directions simultaneously or sequentially by a tenter method, a method of biaxial stretching in the longitudinal and width directions simultaneously by a tubular method, and a method of uniaxial stretching in a flow direction of a film using a difference in rotational speed ratio between two or more rolls.

Uniaxial stretching is preferably performed by feeding the film into a roll stretching machine, preheating the film with a preheating roll, and then uniaxially stretching the film in the MD direction (take-off speed direction). From the viewpoint of increasing the production efficiency, it is preferable that immediately after the raw film to be stretched is preheated, the film is uniaxially stretched in the MD direction. Uniaxial stretching in the present invention means stretching in the uniaxial direction, but stretching may be performed in a direction different from the uniaxial direction to an extent that the effect of the present invention is not impaired. This is because even when an attempt is made to stretch a film in the uniaxial direction, the film may be substantially stretched in a direction different from the uniaxial direction, depending on a stretching facility used.

An annealing treatment may be performed on the stretched film after stretching, if needed. The annealing treatment can be performed by bringing a stretched sheet into contact with a heating roll.

The stretched film is highly transparent, and haze, which is measured under conditions employed in Examples to be described below, of the stretched film is preferably 20% or less and more preferably 15% or less.

[Laminate]

A laminate of the present invention includes the above-described film of the present invention. The laminate of the present invention may be an aspect having a plurality of layers made of the film of the present invention. The above-described film of the present invention is preferably used as a base material in the laminate. Other layers in the laminate of the present invention may be appropriately employed according to the application, and examples thereof include a barrier layer.

The laminate of the present invention can be produced by a known method, and examples of the method include coextrusion forming, extrusion lamination, dry lamination, and thermal lamination of one or more thermoplastic resins.

In addition, in a case where the laminate of the present invention includes a barrier layer, it is possible to form the barrier layer on the surface of the film of the present invention by known metal vapor deposition, coating method, or coextrusion method.

The film of the present invention is capable of further imparting various functions when being laminated. Examples of a lamination method include a method in which the film is coextruded with a barrier resin (for example, EVOH, Ny, or the like) or an adhesive resin (for example, ADMER) and a method in which a surface layer is coated with the film (for example, a vapor deposited film). The vapor deposited film may be composed of a metal or may be composed of an inorganic oxide.

Examples of the metal that constitutes a metal vapor deposited film include aluminum, chromium, tin, nickel, copper, silver, gold, and platinum. In addition, examples of a metal oxide include aluminum oxide, silicon oxide, magnesium oxide, calcium oxide, zirconium oxide, titanium oxide, boron oxide, hafnium oxide, and barium oxide.

[Package]

A package of the present invention includes the above-described film of the present invention. For example, the package can be obtained by forming the laminate of the present invention described above into a bag-shaped container, filling this container with a product to be packaged (content) in various applications, and then heat sealing the container.

Examples

Hereinafter the present invention will be more specifically described based on Examples, but the present invention is not limited to these Examples in any way.

In the following Examples, MFRs, densities, molecular weight distributions (Mw/Mn), the amounts of low-molecular-weight components, elastic moduli, haze, and low contamination properties were measured or evaluated as follows.

<Melt flow rate (MFR) [g/10 min]>

The MFRs of ethylene-based polymers used in Examples and Comparative Examples were measured under conditions of 190°C and a load of 2.16 kg (kgf) in accordance with JIS K7210.

<Density [kg/m$^3$]>

The densities of the ethylene-based polymers used in Examples and Comparative Examples were measured by a density gradient tube method using a strand that could be obtained at the time of measuring the melt index in accordance with JIS K7112.

<Molecular weight distribution (Mw/Mn)>

The weight average molecular weights (Mw), number average molecular weights (Mn), and molecular weight distributions (Mw/Mn) of the ethylene-based polymers used in Examples and Comparative Examples are numerical values measured by gel permeation chromatography (GPC) and were computed based on a conversion method after a calibration curve was created using commercially available monodisperse polystyrene.

<Amount of low-molecular-weight component>

The amounts of low-molecular-weight components in the ethylene-based polymers used in Examples and Comparative Examples were obtained as follows. A value of the amount of $C_{10}$ to $C_{50}$ components for which a Soxhlet extraction liquid (hexane) having an appropriately adjusted volume was used as a test liquid and the test liquid was subjected to GC (FID) and quantified (n-$C_{20}H_{42}$ conversion) by an absolute calibration curve method was regarded as the amount of the low-molecular-weight component. The details are as described above.

<Elastic modulus>

A dumbbell having a size in accordance with JIS K6781 punched from a film obtained in each of Examples and Comparative Examples was used as a punched specimen, and a case of punching in parallel with the take-off direction of the film is regarded as MD (longitudinal direction). The specimen was set up in air chucks of a universal tester and subjected to a tensile test with a chuck distance set to 80 mm and a tensile speed set to 200 mm/min. The slope of the initial stress to the displacement was regarded as the modulus.

<Haze>

The haze of a film obtained in each of Examples and Comparative Examples was measured according to a method regulated in JIS K7136.

<Dart impact strength>

The dart impact strength was measured under the following conditions in accordance with ASTM D1709.

A specimen was clamped with a pneumatic clamping system, a hemispherical dart is dropped from a fixed height, and a load at which 50% of the specimen is broken is read out from a graph. The number of times of dropping per level was set to 10 times. The dart impact strength was evaluated using a 40 μm-thick and 320 mm-wide single-layer film (unstretched film) produced under the following forming conditions.

<<Forming conditions>>

The forming was performed using a 50 mmφ blown film forming machine manufactured by the Modern Machinery Co., Ltd., a barrier type screw as a screw, a 100 mmφ (diameter) die, and a two-gap type air ring with the extrusion amount set to 28.8 kg/hr and the take-off speed set to 20 m/min.

<Extrusion properties>

The ethylene-based polymers used in Examples and Comparative Examples were melt-kneaded at 190°C with an extruder, and then 40 μm-thick unstretched films (raw films) were produced with the blown film forming machine. Values obtained by dividing the resin pressure [MPa] at this time by the extrusion amount [kg/h] were evaluated as extrusion properties.

<Low contamination properties>

The ethylene-based polymers used in Examples and Comparative Examples were melt-kneaded at 190°C with an extruder, and then 40 μm-thick unstretched films (raw films) were produced with the blown film forming machine. An aluminum vapor-deposited PET film and the film of the present invention were overlapped with each other so that the vapor-deposited surface and the film adhered to each other, a load of 10 kgf/100 $cm^2$ was applied thereto in the lamination direction, and the wetting indexes (unit: dyn/cm) of the vapor-deposited surface before the application of the load (initial value) and after the application of the load at 23°C for one day were measured.

Vapor-deposited surface wetting index retention [%] = after application of load at 23°C for one day/before application of load (initial value) × 100 and evaluated with the following criteria.

O: Vapor-deposited surface wetting index retention ≥ 60%
X: Vapor-deposited surface wetting index retention < 60%

[Example 1]

"NEO-ZEX 5510F" manufactured by Prime Polymer Co., Ltd., which had been produced by a solution method using a Ziegler catalyst and had an MFR of 1.0 g/10 min and a density of 957 $kg/m^3$, was used as an ethylene-based polymer, melt-kneaded at 230°C with the extruder, and then a 125 μm-thick unstretched film (raw film) was produced with a cast forming machine. This raw film was uniaxially stretched at a stretch ratio of five times while being heated with a heating roll to 120°C, thereby obtaining a uniaxially stretched film having a thickness of 25 μm. The haze and elastic modulus of the obtained unstretched film and the haze of the stretched film were evaluated. In addition, the dart impact strength, the extrusion properties, and the low contamination properties were separately evaluated as described above. The results are shown in Table 1.

[Example 2]

An unstretched film was obtained in the same manner as in Example 1, except that "NEO-ZEX 5520F" manufactured by Prime Polymer Co., Ltd., which had been produced by the solution method using a Ziegler catalyst and had an MFR of 2.2 g/10 min and a density of 955 $kg/m^3$, was used as an ethylene-based polymer. In addition, measurements and evaluations were performed in the same manner as in Example 1 (some of the measurements and evaluations were omitted). The results are shown in Table 1.

[Example 3]

Measurements and evaluations were performed in the same manner as in Example 1 (some of the measurements and evaluations were omitted) except that "EVL-H SP6011" manufactured by Prime Polymer Co., Ltd., which had been produced by a slurry method using a metallocene catalyst and had an MFR of 1.1 g/10 min and a density of 957 kg/m$^3$, was used as an ethylene-based polymer. The results are shown in Table 1.

[Example 4]

An unstretched film was obtained in the same manner as in Example 1, except that "NEO-ZEX 5521F" manufactured by Prime Polymer Co., Ltd., which had been produced by the solution method using a Ziegler catalyst and had an MFR of 2.3 g/10 min and a density of 953 kg/m$^3$, was used as an ethylene-based polymer. In addition, measurements and evaluations were performed in the same manner as in Example 1 (some of the measurements and evaluations were omitted). The results are shown in Table 1.

[Example 5]

An unstretched film was obtained in the same manner as in Example 1, except that "NEO-ZEX 5021F" manufactured by Prime Polymer Co., Ltd., which had been produced by the solution method using a Ziegler catalyst and had an MFR of 2.3 g/10 min and a density of 948 kg/m$^3$, was used as an ethylene-based polymer. In addition, measurements and evaluations were performed in the same manner as in Example 1 (some of the measurements and evaluations were omitted). The results are shown in Table 1.

[Comparative Example 1]

An unstretched film and a stretched film were obtained in the same manner as in Example 1, except that "HI-ZEX 3600F" manufactured by Prime Polymer Co., Ltd., which had an MFR of 1.0 g/10 min and a density of 958 kg/m$^3$, was used as an ethylene-based polymer. In addition, measurements and evaluations were performed in the same manner as in Example 1. The results are shown in Table 1.

[Comparative Example 2]

An unstretched film and a stretched film were obtained in the same manner as in Example 1, except that "HI-ZEX 7000F" manufactured by Prime Polymer Co., Ltd., which had an MFR of 0.04 g/10 min and a density of 951 kg/m$^3$, was used as an ethylene-based polymer. In addition, measurements and evaluations were performed in the same manner as in Example 1. The results are shown in Table 1.

[Comparative Example 3]

An unstretched film was obtained in the same manner as in Example 1, except that "EVOLUE SP4030" manufactured by Prime Polymer Co., Ltd., which had an MFR of 4 g/10 min and a density of 938 kg/m$^3$, was used as an ethylene-based polymer. In addition, measurements and evaluations were performed in the same manner as in Examples (some of the measurements and evaluations were omitted). The results are shown in Table 1.

[Table 1]

| | | Unit | Example 1 | Example 2 | Example 3 | Example 4 | Example 5 |
|---|---|---|---|---|---|---|---|
| Kind and physical properties of resin | Brand name | - | 5510F | 5520F | SP6011 | 5521F | 5021F |
| | Density | kg/m$^3$ | 957 | 955 | 957 | 953 | 948 |
| | MFR | g/10 min | 1.0 | 2.2 | 1.1 | 2.3 | 2.3 |
| | Low-molecular-weight component | ppm | 41 | 54 | 90 | 50 | 54 |
| | Mw/Mn | - | 2.8 | 2.6 | 2.3 | 2.9 | 2.8 |

(continued)

| | | Unit | Example 1 | Example 2 | Example 3 | Example 4 | Example 5 |
|---|---|---|---|---|---|---|---|
| Physical properties of unstretched film | Film thickness | μm | 125 | 125 | - | 125 | 125 |
| | Haze | % | 16 | 18 | - | 18 | 14 |
| | Elastic modulus (MD/TD) | MPa | 1211/1286 | 1249/1421 | - | 1240/1410 | - |
| | Dart impact strength (Note) | 9 | 82 | 79 | 47 | 72 | 73 |
| Physical properties of stretched film | Film thickness | μm | 25 | - | - | - | - |
| | Haze | % | 5.7 | - | - | - | - |
| Extrusion properties | | MPa/(kq/h) | 0.41 | 0.30 | 0.49 | 0.30 | 0.30 |
| Low contamination properties | | - | ○ | ○ | ○ | ○ | ○ |
| Note: Evaluated using a 40 μm-thick film | | | | | | | |

Table 1 (continued)

| | | Unit | Comparative Example 1 | Comparative Example 2 | Comparative Example 3 |
|---|---|---|---|---|---|
| Kind and physical properties of resin | Brand name | - | 3600F | 7000F | SP4030 |
| | Density | kg/m$^3$ | 958 | 951 | 938 |
| | MFR | g/10 min | 1.0 | 0.04 | 4 |
| | Low-molecular-weight component | ppm | 341 | 2700 or more | - |
| | Mw/Mn | - | 6.3 | 30 | 7 |
| Physical properties of unstretched film | Film thickness | μm | 125 | 125 | 40 |
| | Haze | % | 24 | 92 | - |
| | Elastic modulus (MD/TD) | MPa | 1197/1365 | 1145/1449 | 772/937 |
| | Dart impact strength (Note) | 9 | 57 | < 32 | - |
| Physical properties of stretched film | Film thickness | μm | 25 | 25 | - |
| | Haze | % | 6.9 | 30 | - |
| Extrusion properties | | MPa/(kq/h) | 0.45 | 0.92 | - |
| | Low contamination properties | - | I X | X | - |
| Note: Evaluated using a 40 μm-thick film | | | | | |

**Claims**

1. A film comprising an ethylene-based polymer satisfying the following requirements (a1) to (a4):

(a1) a density is 940 to 980 kg/m$^3$;

(a2) a melt flow rate (MFR) measured at 190°C and a load of 2.16 kg is 0.01 to 10 g/10 min;

(a3) an amount of a low-molecular-weight component is 300 ppm or less; and

(a4) a ratio of a weight average molecular weight (Mw) to a number average molecular weight (Mn) (molecular weight distribution; Mw/Mn) measured by gel permeation chromatography (GPC) is 10 or less.

2. The film according to claim 1, wherein the film has a thickness of 0.005 mm or more and 1 mm or less.

3. The film according to claim 2, wherein the film is a stretched film.

4. A laminate comprising the film according to any one of claims 1 to 3.

5. The laminate according to claim 4, further comprising a barrier layer.

6. A package comprising the film according to any one of claims 1 to 3.

7. A package comprising the laminate according to claim 4.

8. A method for producing the film according to any one of claims 1 to 3, the method comprising a step of melting a raw material resin containing the ethylene-based polymer.

## INTERNATIONAL SEARCH REPORT

| International application No. |
| --- |
| **PCT/JP2024/009233** |

| A. | CLASSIFICATION OF SUBJECT MATTER |
| --- | --- |

*C08J 5/18*(2006.01)i; *B29C 48/08*(2019.01)i; *B29C 55/02*(2006.01)i; *B32B 27/32*(2006.01)i; *B65D 65/40*(2006.01)i
FI:   C08J5/18 CES; B29C48/08; B29C55/02; B32B27/32; B32B27/32 Z; B65D65/40 D

According to International Patent Classification (IPC) or to both national classification and IPC

| B. | FIELDS SEARCHED |
| --- | --- |

Minimum documentation searched (classification system followed by classification symbols)

C08J5/00-5/02; C08J5/12-5/22; B29C48/08; B29C55/02; B32B1/00-43/00; B65D65/40; C08K3/00-13/08; C8L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-526654 A (DOW GLOBAL TECHNOLOGIES LLC) 19 September 2019 (2019-09-19) <br> claims 1, 5, 9, paragraphs [0001]-[0002], [0074]-[0085], tables 3-4, examples | 1-8 |
| A | WO 2022/153893 A1 (PRIME POLYMER CO., LTD.) 21 July 2022 (2022-07-21) <br> entire text | 1-8 |
| A | JP 2012-219188 A (ASAHI KASEI CHEMICALS CORPORATION) 12 November 2012 (2012-11-12) <br> entire text | 1-8 |
| A | JP 2018-47703 A (DAI NIPPON PRINTING CO., LTD.) 29 March 2018 (2018-03-29) <br> entire text | 1-8 |
| A | JP 11-12558 A (MITSUI CHEMICALS, INC.) 19 January 1999 (1999-01-19) <br> entire text | 1-8 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 May 2024** | **28 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/009233**

| Patent document cited in search report | | | Publication date (day/month/year) | Patent family member(s) | | | Publication date (day/month/year) |
|---|---|---|---|---|---|---|---|
| JP | 2019-526654 | A | 19 September 2019 | US | 2019/0169385 | A1 | |
| | | | | claims 1, 5, 9, paragraphs [0001]-[0002], [0074]-[0079], examples | | | |
| | | | | WO | 2018/031392 | A1 | |
| | | | | EP | 3497154 | A1 | |
| | | | | CN | 109476860 | A | |
| WO | 2022/153893 | A1 | 21 July 2022 | US | 2024/0052117 | A1 | |
| | | | | entire text | | | |
| | | | | EP | 4279248 | A1 | |
| | | | | CN | 116457186 | A | |
| JP | 2012-219188 | A | 12 November 2012 | (Family: none) | | | |
| JP | 2018-47703 | A | 29 March 2018 | (Family: none) | | | |
| JP | 11-12558 | A | 19 January 1999 | US | 6110549 | A | |
| | | | | CN | 1198449 | A | |
| | | | | KR | 10-1998-0081868 | A | |

Form PCT/ISA/210 (patent family annex) (July 2022)

**REFERENCES CITED IN THE DESCRIPTION**

**Patent documents cited in the description**

- JP 6716764 B
- JP 2020121455 A
- WO 2022153893 A